# EUROPEAN PATENT SPECIFICATION

(11) **EP 3 404 134 B1**
(45) Date of publication and mention of the grant of the patent: **01.05.2019**
(21) Application number: 17020214.7
(22) Date of filing: 18.05.2017
(51) Int. Cl.: D05B 1/08, B32B 27/12, D05B 93/00

(54) **PROCESS FOR FORMING A SEAM CONSTRUCTION ON A SUBSTRATE**
VERFAHREN ZUR HERSTELLUNG EINER NAHTKONSTRUKTION AUF EINEM SUBSTRAT
PROCÉDÉ DE FORMATION D'UNE STRUCTURE DE COUTURE SUR UN SUBSTRAT

(43) Date of publication of application: 21.11.2018
(73) Proprietor: Well & David Corp., Kaohsiung City 80450 (TW)
(72) Inventor: HSIEH, Ker-Chang, Kaohsiung City 80445 Taiwan (TW); CHENG, Chi-Cheng, Kaohsiung City 81356 Taiwan (TW); HO, New-Jin, Kaohsiung City 80782 Taiwan (TW)
(74) Representative: Warneke, Margit

(56) References cited:
- EP-A1- 2 230 344
- EP-A1- 2 283 749
- EP-A1- 2 716 804
- WO-A2-2004/103665
- DE-U1-202015 101 570
- GB-A- 591 633
- JP-A- H 059 866
- LEHOVETZKI G H: "LES FILS A COUDRE INDUSTRIELS DANS LA MAILLE", FILIERE MAILLE, INDUSTRIE TEXTILE, PARIS, FR, no. 39, 1 May 1996 (1996-05-01), pages 63-65, XP000587949, ISSN: 1146-0733

## Description

The disclosure relates to a process for forming a seam construction on a substrate, and more particularly to a process for making a seam construction having enhanced construction strength on a substrate.

EP 2 716 804 A1 relates to a ravel preventing method for preventing ravel from occurring at a seam of a sewing end portion in seams of multi-thread chain stitching formed by a needle thread and a looper thread using a sewing machine, such as a multi-thread chain stitch sewing machine and a covering chain stitch sewing machine, to a ravel preventing apparatus for performing this method, and to a seam structure formed using these method and apparatus.

GB 591 633 A relates to a method of making textile fabrics, felts and paper containing filaments or fibers which can be rendered adhesive by means of heat, with or without pressure and for with -or without the assistance of solvents to bind fibers in the product.

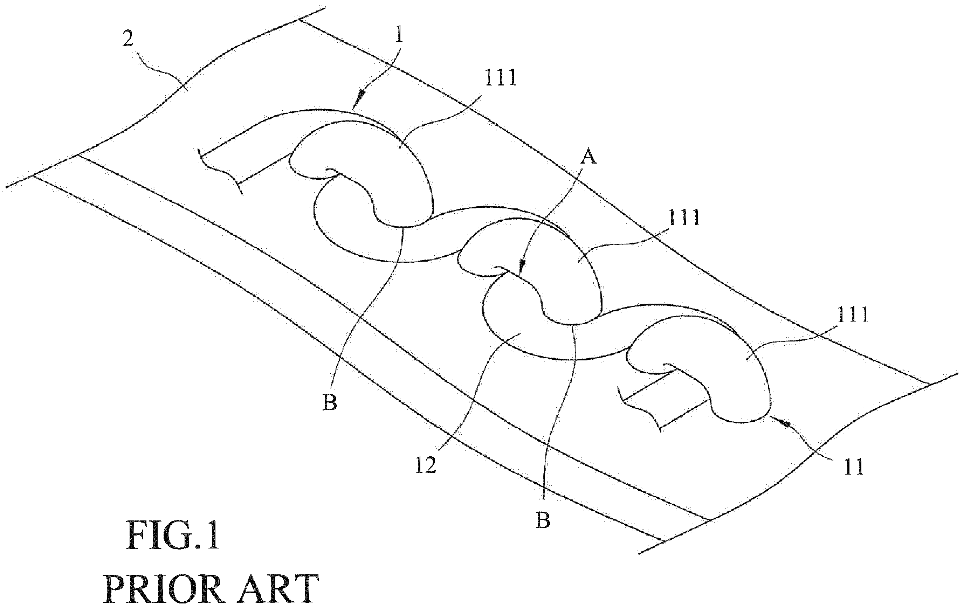

Referring to Figure 1, a conventional seam construction 1 is shown to be formed on a fabric 2. The seam construction 1 includes a first thread 11 and a second thread 12. A plurality of stitch knots (A) are formed by interlacing the first thread 11 with the second thread 12. Specifically, a plurality of stitches 111 are formed on two opposite surfaces of the fabric 2 by the first thread 11. The second thread 12 is caused to pass through the stitches 111 formed on one of the opposite surfaces of the fabric 2 so as to interlace with the first thread 11 to form the stitch knots (A) on the fabric 2. Friction produced at contact points (B) between the interlaced first and second threads 11, 12 at the stitch knots (A) provides construction strength.

However, when the fabric 2 is pulled in use, the contact between the first thread 11 and the second thread 12 at some of the contact points (B) may become loose, thereby impairing the construction strength. In order to overcome the problem, an adhesive patch is generally applied to each of the contact points (B) to cause the first and second threads 11, 12 to adhere to each other at the contact points (B) . However, it is time-consuming and laborious to apply the adhesive patch to each of the contact points (B) . Furthermore, it is uncomfortable to wear clothes made from the fabric 2 due to the presence of the relatively stiff adhesive patches.

An object of the disclosure is to provide a process for making a seam construction having enhanced construction strength on a substrate such that the construction strength can be maintained even when the substrate is pulled.

According to a first aspect of the disclosure, there is provided a process for forming a seam construction on a substrate, comprising steps of:
a) providing a first thread coated with a first curable resinous material;
b) providing a second thread coated with a second curable resinous material which is different from the first curable resinous material;
c) forming on the substrate a stitch knot by virtue of interlacing the first thread with the second thread; and
d) curing the stitch knot to chemically bond the first and second curable resinous materials together.

According to a second aspect of the disclosure, there is provided a seam construction made by the aforesaid process.

Other features and advantages of the disclosure will become apparent in the following detailed description of the embodiment (s) with reference to the accompanying drawings, of which:
Figure 1 is a fragmentary perspective view of a conventional seam configuration formed on a fabric;
Figure 2 is a flow diagram of an embodiment of a process for forming a seam construction on a substrate according to the disclosure;
Figure 3 is a fragmentary perspective view of an embodiment of a seam construction according to the disclosure as viewed from a first surface of a substrate;
Figure 4 is a fragmentary perspective view of the embodiment of the seam construction according to the disclosure as viewed from a second surface of the substrate opposite to the first surface of the substrate;
Figure 5 is a schematic sectional view of the embodiment of the seam construction according to the disclosure as viewed from the first surface of the substrate; and
Figure 6 is a schematic sectional view of the embodiment of the seam construction according to the disclosure to illustrate bonding of a first curable resinous material coated on a first thread of the embodiment of the seam construction to a second curable resinous material coated on a second thread of the embodiment of the seam construction.

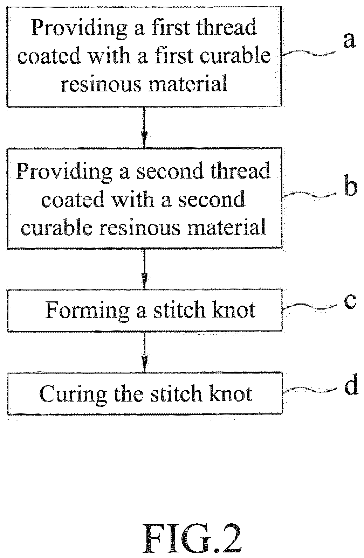

As shown in Figure 2, an embodiment of a process for forming a seam construction on a substrate according to the disclosure includes steps of: a) providing a first thread coated with a first curable resinous material; b) providing a second thread coated with a second curable resinous material; c) forming a plurality of stitch knots; and d) curing the stitch knots.

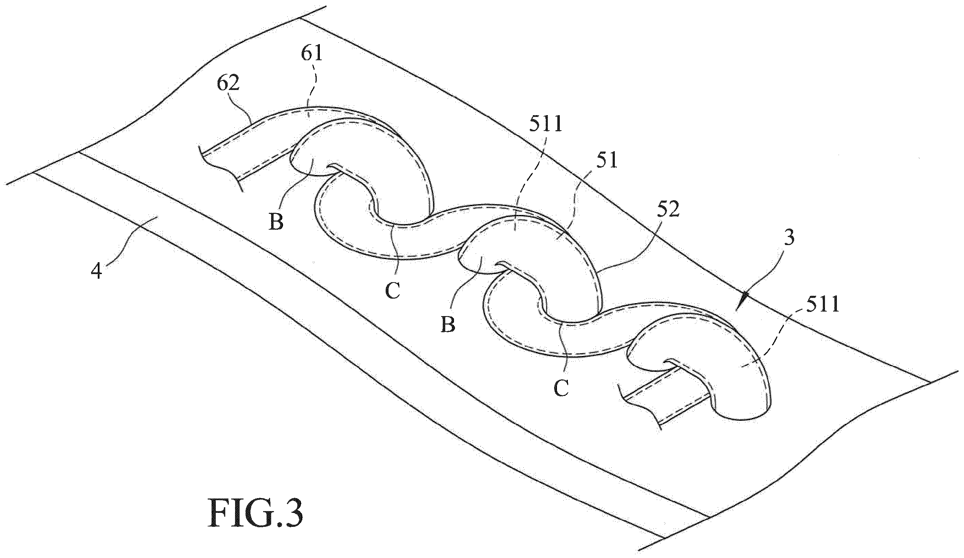

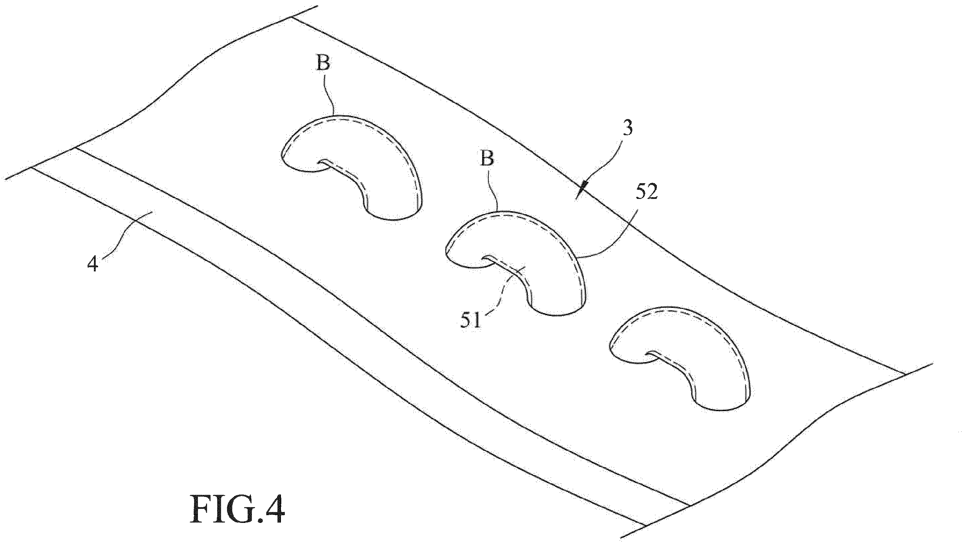

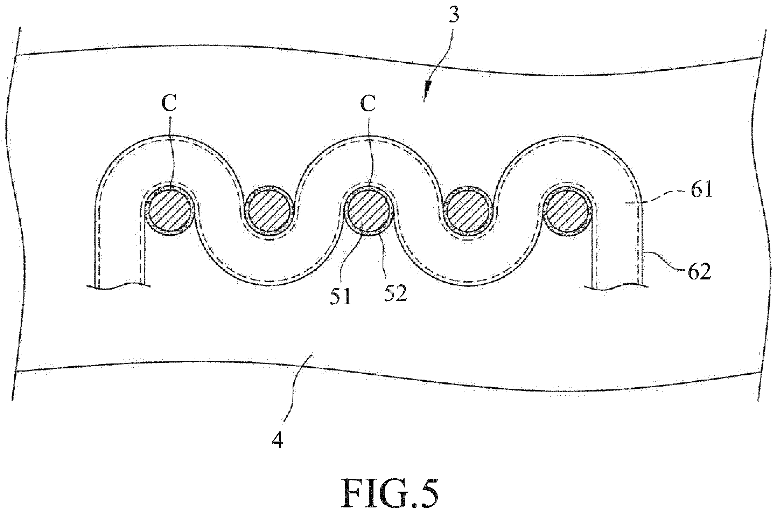

Referring to Figures 3 to 6, in step a), a first thread 51 is coated with a first curable resinous material 52. The first thread 51 used in the embodiment is made from a first polymeric material. The first curable resinous material 52 used in the embodiment is a bisphenol A-allyl amine type benzoxazine resin. Specifically, the coating of the first thread 51 with the first curable resinous material 52 may be performed by immersing the first thread 51 in a melt of the first curable resinous material 52 or a dispersion or solution of the first curable resinous material 52 in a volatile medium, followed by volatilization of the volatile medium if the volatile medium is contained and solidification of the first curable resinous material 52 at an ambient temperature.

In step b), a second thread 61 is coated with a second curable resinous material 62 which is different from the first curable resinous material 52. The second thread 61 is made from a second polymeric material which may be the same as or different from the first polymeric material for making the first thread 51. The second curable resinous material 62 used in the embodiment is a bisphenol A type epoxy resin. The coating of the second thread 61 with the second curable resinous material 62 may be performed in a manner similar to that described above for step a).

In step c), a plurality of stitch knots (B) are formed on a substrate 4 by interlacing the first thread 51 coated with the first curable resinous material 52 with the second thread 61 coated with the second curable resinous material 62. Specifically, a plurality of stitches 511 are formed on two opposite surfaces of the substrate 4 by the first thread 51 coated with the first curable resinous material 52. The second thread 61 coated with the second curable resinous material 62 is caused to pass through the stitches 511 formed on one of the two opposite surfaces of the substrate 4 so as to interlace with the first thread 51 coated with the first curable resinous material 52 to form the stitch knots (B) on the substrate 4. At the stitch knots (B) formed in step c), the first curable resinous material 52 coated on the first thread 51 merely contacts the second curable resinous material 62 coated on the second thread 61 at contact points (C) . Examples of the substrate 4 suitable for the disclosure include, but are not limited to, a fabric, leather, and a combination thereof.

It should be noted that the manner for forming the stitch knots (B) is not limited to that described above, which is only illustrative.

In step d), the stitch knots (B) are cured at a baking temperature for a sufficient curing period so as to chemically bond the first and second curable resinous materials 52, 62 together at the stitch knots (B) (i.e., at the contact points (C)) so as to form a seam construction 3 on the substrate 4. In the embodiment in which a bisphenol A-allyl amine type benzoxazine resin is used as the first curable resinous material 52 and a bisphenol A type epoxy resin is used as the first curable resinous material 62, the curing step is performed at a baking temperature higher than 120°C. The baking temperatures and the corresponding curing periods for the curing treatment are shown in Table 1 below. It should be noted that in the curing treatment, the first and second curable resinous materials 52, 62 may chemically bond together at the stitch knots (B) (i.e., at the contact points (C)) only, and may not chemically bond to the substrate 4.

**Table 1:**

| Baking temperature (°C) | Curing period (minutes) |
|---|---|
| 120 | more than 120 |
| 150 | 95 |
| 180 | 14 |
| 200 | 6 |
| 220 | 3 |

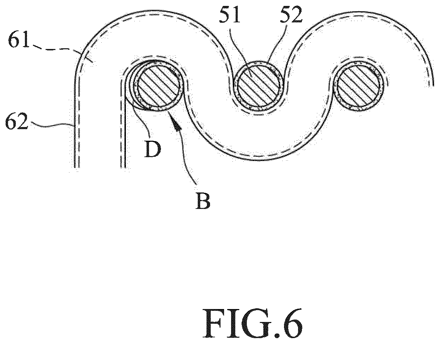

With reference to Figure 6, even if a gap (D) is formed between the first curable resinous material 52 and the second curable resinous material 62 at the stitch knot (B), the first and second curable resinous materials 52, 62 may soften to fill the gap (D) during the curing step so as to chemically bond together.

In view of the aforesaid, in the process for forming the seam construction 3 according to the disclosure, the first and second curable resinous materials 52, 62 may chemically bond together at the stitch knots (B) (i.e., at the contact points (C)) after curing. Therefore, the seam construction 3 thus formed may have enhanced construction strength, and the aforesaid disadvantages encountered in the prior art may be overcome.

## Claims

1. (Amended) A process for forming a seam construction (3) on a substrate (4), comprising steps of:
a) providing a first thread (51);
b) providing a second thread (61); and
c) forming on the substrate (4) a stitch knot (B) by interlacing the first thread (51) with the second thread (61),
**characterized in that**
in step a), the first thread (51) is coated with a first curable resinous material (52), and
in step b), the second thread (61) is coated with a second curable resinous material (62) which is different from the first curable resinous material (52), and
further **characterized by** comprising step d) curing the stitch knot (B) to chemically bond the first and second curable resinous materials (52, 62) together.

2. The method according to Claim 1, **characterized in that** the first curable resinous material (52) is a bisphenol A-allyl amine type benzoxazine resin and the second curable resinous material (62) is a bisphenol A type epoxy resin.

3. The method according to Claim 2, **characterized in that** step d) is performed at a temperature higher than 120°C.

4. The method according to Claim 1, **characterized in that** the substrate (4) is selected from the group consisting of a fabric, leather, and a combination thereof.

## Patentansprüche

1. Verfahren zum Bilden einer Nahtkonstruktion (3) auf einem Substrat (4), umfassend folgende Schritte:
a) Bereitstellen eines ersten Fadens (51);
b) Bereitstellen eines zweiten Fadens (61);
c) Bilden eines Stichknotens (B) auf dem Substrat (4) durch Verflechten des ersten Fadens (51) mit dem zweiten Faden;
**dadurch gekennzeichnet, dass** in Schritt a) der erste Faden (51) mit einem ersten aushärtbaren Harzmaterial (52) beschichtet ist und in Schritt b) der zweite Faden (61) mit einem zweiten aushärtbaren Harzmaterial (62) beschichtet ist, das sich vom ersten aushärtbaren Harzmaterial (52) unterscheidet, und
ferner **gekennzeichnet durch** Schritt d) Aushärten des Stichknotens (B), um das erste und das zweite aushärtbare Harzmaterial (52, 62) chemisch miteinander zu verbinden.

2. Verfahren nach Anspruch 1, **dadurch gekennzeichnet, dass** das erste aushärtbare Harzmaterial (52) ein Benzoxazinharz vom Bisphenol A-Allylamin-Typ ist und das zweite aushärtbare Harzmaterial (62) ein Epoxidharz vom Bisphenol A-Typ ist.

3. Verfahren nach Anspruch 2, **dadurch gekennzeichnet, dass** Schritt d) bei einer Temperatur von mehr als 120 ° C durchgeführt wird.

4. Verfahren nach Anspruch 1, **dadurch gekennzeichnet, dass** das Substrat (4) Stoff, Leder oder einer Kombination davon ist.

## Revendications

1. Procédé de formation d'une structure de couture (3) sur un substrat (4), comprenant les étapes consistant à:
a) fournir un premier fil (51);
b) fournir un deuxième fil (61);
c) former sur le substrat (4) un noeud de couture (B) en entrelacant le premier fil (51) avec le deuxième fil (61);
**caractérisé en ce qu'**en étape a) le premier fil (51) est revêtu d'un premier matériau résineux durcissable (52) et en étape b) le deuxième fil (61) est revêtu d'un deuxième matériau résineux durcissable (62) qui est différent du premier matériau résineux durcissable (52) et
**caractérisé en ce qu'**il comprend en outre l'étape consistant à d) durcir le noeud de couture (B) pour lier chimiquement les premier et second matériaux résineux durcissables (52, 62) ensemble.

2. Procédé selon la revendication 1, **caractérisé en ce que** le premier matériau résineux durcissable (52) est une résine benzoxazine de type bisphénol A-allylamine et le second matériau résineux durcissable (62) est une résine époxy de type bisphénol A.

3. Procédé selon la revendication 2, **caractérisé en ce que** l'étape d) est réalisée à une température supérieure à 120 ° C.

4. Procédé selon la revendication 1, **caractérisé en ce que** le substrat (4) est choisi dans le groupe comprenant un tissu, un cuir et une combinaison de ceux-ci.
